# EUROPEAN PATENT SPECIFICATION

(11) **EP 1 521 783 B1**
(45) Date of publication and mention of the grant of the patent: **22.04.2009**
(21) Application number: 03763964.8
(22) Date of filing: 03.07.2003
(51) Int. Cl.: C08F 10/00, C08F 2/34

(54) **PROCESS FOR THE (CO-)POLYMERISATION OF OLEFINS IN THE GAS PHASE**
VERFAHREN ZUR (CO-)POLYMERISATION VON OLEFINEN IN DER GASPHASE
PROCEDE POUR LA COPOLYMERISATION D'OLEFINES EN PHASE GAZEUSE

(30) Priority: 11.07.2002 EP 02358014
(43) Date of publication of application: 13.04.2005
(73) Proprietor: INEOS EUROPE LIMITED, Lyndhurst Hampshire SO43 7FG (GB)
(72) Inventor: ISNARD, Jean-Pierre, 3, allee Tiboulen, F-13960 Sausset-les-Pins (FR); SITRUCK, Claude, F-13500 Martigues (FR)
(74) Representative: Preece, Michael
(86) International application number: PCT/GB2003/002861
(87) International publication number: WO 2004/007571

(56) References cited:
- EP-A- 0 180 420
- EP-A- 0 574 821
- EP-A- 0 722 956
- EP-A- 0 853 091
- WO-A-03/016362
- WO-A-03/033550
- US-A- 3 477 513
- US-A- 5 026 502
- US-A- 6 162 779
- PATENT ABSTRACTS OF JAPAN vol. 016, no. 265 (C-0951), 16 June 1992 (1992-06-16) & JP 04 063290 A (ASAHI CHEM IND CO LTD), 28 February 1992 (1992-02-28)

## Description

The present invention relates to a process for improving the start up of polymerization or copolymerization of alpha-olefins in a gas phase reactor, preferably a fluidized bed gas phase reactor.

Polymerizing alpha-olefins in the gas phase by bringing them into contact with a catalyst system in an apparatus comprising, for example, a reactor with a fluidized bed and/or with mechanical stirring is known. In the special case of the use of a fluidized bed reactor, the solid polymer in course of formation is kept in the fluidized state by means of a rising reaction gas mixture, comprising the alpha-olefins to be polymerized. This gaseous mixture leaving the reactor is generally cooled before being recycled into the reactor and an additional quantity of alpha-olefins corresponding to the quantities consumed is added to it. The start up of the polymerization reaction in the gas phase is generally performed by introducing the catalyst system into a reactor fed with reaction gas mixture, and also containing a charge powder. This charge powder, consisting of solid particles, such as particles of polyolefin, is used to form the initial bed at the moment when the polymerisation reaction starts up, favoring in particular a suitable dispersion of the catalyst system in the reaction medium. Polymerization may then be performed continuously, the catalyst system being introduced into the reactor continuously or in sequence. The polymer produced may be withdrawn from the reactor also continuously or in sequence.

In the industrial production of polyolefins, it may be necessary to stop the polymerization reaction temporarily in order to be able to carry out various operations for maintaining or cleaning the reactor. Impurities such as waster and oxygen may be introduced during these various operations into the polymerization apparatus and/or into the charge powder introduced into the reactor when the reaction is restarted. Under these conditions and although the catalyst system used, of Ziegler-Natta type, is known for not having an induction period, the polymerization reaction commences several hours after the commencement of introduction of the catalyst system into the reactor.

The actual start up of polymerization consequently takes place in the presence of a relatively high concentration of catalyst system in the fluidized bed, so that the polymerization reaction speed may increase rapidly and abruptly, with the risk of forming localized hot spots and the bursting of polymer grains into fine particles. These localized hot spots may lead to the formation of agglomerates and setting of the polymer inside the reactor, and are liable to cause the stoppage of the polymerization reaction. Moreover, in the special case of polymerization in a fluidized bed, the fine particles, formed by the bursting of the grains making up the bed, are inevitably entrained out of this bed, which gives rise to a continuation of the polymerizing reaction outside the reactor.

Moreover, the considerably increased concentration of catalyst system in the fluidized bed at the moment when the reaction starts up appreciably modifies the conditions of development of the polymerization or copolymerisation, so that the polymers or copolymers produced in the initial phase of the reaction have properties notably different from those of the desired products, especially as regards density, comonomer content, melt index, crystallinity and content of catalyst residues. It is then observed that it is necessary to produce a relatively high quantity of polyolefins before obtaining the product of desired quality.

The prior art teaches to use organoaluminium compounds to purify the reactor and/or bed particles in order to improve the start-up conditions. EP180420 is an example thereof.

It has now been found that it is possible to avoid the difficulties mentioned above as well as to bring additional advantages as disclosed hereafter and to obtain the start up of the polymerization or copolymerisation reaction immediately after the alpha-olefins have been brought into contact with the catalyst system and a charge powder, without the risk of formation of agglomerates or fine particles, the polyolefins produced during this period of start up having constant properties and having immediately the desired quality.

The object of the present invention is therefore a process for the polymerisation or copolymerisation in the gas phase of olefins by bringing the said olefins into contact, under polymerization or copolymerisation conditions in a reactor in which the polymer or the copolymer is maintained in a fluidized bed and/or agitated with mechanical stirring, with a catalyst system, which process comprises a pre start-up operation characterized in that, prior to the introduction of the catalytic system in the reactor, the reactor is subjected to a cleaning treatment of at least five minutes comprising the steps of introducing into the reactor an alkane having from 4 to 8 carbon atoms, circulating said alkane across the reactor under a pressure above atmospheric pressure and at a temperature of at least 40°C, depressurizing and purging the reactor:

The Applicants have unexpectedly found that this alkane treatment lead to smooth and improved in all aspects polymerization start-ups, as showed in the examples. While not wishing to be bound to this explanation, the Applicants believe that it is the absorption capacity of the alkane which positively impacts on the polymer residues and impurities present on the reactor wall, in the piping and exchangers, so that during the depressurizing/purging steps a high desorption of these residues and impurities occur by mechanical and/or dissolution and/or azeotropic type mechanisms.

The essential feature of the present invention lies in said alkane cleaning treatment of the reactor. Many different ways to proceed with this treatment can be explored by the man in the art. Hereafter are depicted some of these treatments that can advantageously be applied.

Said pre start-up operation may be performed during or preferably before or after the introduction of the charge powder into the reactor.The charge powder used for the start up of polymerisation or copolymerisation consists of solid particles of an inorganic product, such as silica, alumina, talc or magnesia, or else an organic product such as a polymer or copolymer. In particular the charge powder may be a polyolefin powder preferably of the same nature as that of the polyolefin powder to be produced, so that as soon as the reaction starts up, polyolefin of the desired quality is obtained immediately. Such a charge powder may in particular originate from a previous polymerisation or copolymerisation reaction. In this way one may use as charge powder a powder of a polyethylene, a polypropylene, a copolymer of ethylene with less than 20% by weight of one or more other alpha-olefins comprising, for example, from 3 to 12 carbon atoms, an elastomeric copolymer of ethylene with from 30 to 70% by weight of propylene, a copolymer of ethylene with less than 20% by weight of ethylene or one or more other alpha-olefins comprising from 4 to 12 carbon atoms, or a copolymer of propylene with from 10 to 40% by weight of 1-butene or a mixture of 1-butene and ethylene. Advantageously the charge powder consists of particles having a mean diameter by mass comprised between 200 and 5000 microns, and preferably comprised between 500 and 3000 microns. The size of the charge powder particles is chosen partly as a function of the size of the polyolefin particles to be produced, and partly as a function of the type of polymerisation reactor and conditions of use of this reactor, such as for example the speed of fluidisation which may for example be comprised between 2 to 10 times the minimum speed of fluidisation of the polyolefin particles to be produced.

The cleaning treatment consists in introducing into the reactor an alkane having from 4 to 8 carbon atoms, circulating said alkane across the reactor under pressure, depressurizing and purging the reactor.

The introduction of the alkane in a fluidised bed and/or with mechanical stirring, is preferably performed in the presence of an inert gas. In particular the treatment may be performed in the presence of nitrogen. It is also preferably performed under airtight conditions in order to avoid any oxygen ingress. It is also preferably performed in the absence of reacting gas like the olefins.

The pressure inside the reactor is at least above the atmospheric pressure. The alkane cleaning treatment is preferably carried out under a pressure comprised between 5 and 30 bars. The treatment is performed at a reactor temperature of at least 40°C, preferably performed at a temperature comprised between 50 and 120°C and more preferably at a temperature comprised between 70 and 110°C. Preferably, when a charge powder is present, the treatment temperature should be below the temperature at which the particles of charge powder begin to soften and form agglomerates.

The alkane is for example, butane, pentane, hexane, heptane or octane. Pentane is preferably used.

The quantity of alkane used according to the invention depends on the state of purity of both the reactor loop and the charge powder. Preferably, the quantity of alkane used for the treatment is such that the alkane partial pressure is comprised between 25 and 95% of the saturated vapor pressure of the said alkane under the treatment conditions (temperature and pressure). More preferably, the quantity of alkane used for the treatment is such that the alkane partial pressure is comprised between 45 and 75% of the saturated vapor pressure of the said alkane under the treatment conditions (temperature and pressure).

In order to provide the most efficient cleaning treatment, it is important that this treatment should last at least five minutes and preferably over 15 minutes. It has been observed, in fact, that when the duration of the treatment is less than 5 minutes, the polymerisation or copolymerisation reaction does not start up immediately when the alpha-olefins are brought into contact with the charge powder in the presence of the catalyst system.

As already indicated, the cleaning process includes after the alkane circulation under pressure a depressurizing step. Then, the consecutive purge operation(s) is/are performed according to techniques in themselves known, such as successive operations of pressurising and degassing the reactor by means of gases or a mixture of gases as referred to above. They may be carried out under a pressure at least equal to atmospheric pressure, preferably under a pressure comprised between 0.1 and 5 MPa, at a temperature equal to or greater than 0 DEG C., but less than the temperature at which the charge powder particles begin to soften and form agglomerates, and preferably at a temperature comprised between 40 DEG and 120 DEG C.

Any appropriate additional cleaning treatment may also be performed. For example, the reactor may additionally be treated with an organoaluminium compound of the formula AIRn X3-n in which R is an alkyl group comprising from 2 to 12 carbon atoms, X is a hydrogen or halogen atom, or an alcoholate group, and n is a whole number or fraction comprised between 1 and 3. Said organoaluminium additional treatment, if used, is preferably performed after the alkane treatment.

The organoaluminium compound, when used, may be chosen from amongst the trialkylaluminium compounds or hydrides, chlorides or alcoholates of alkylaluminium. Generally it is preferred to use a trialkylaluminium such as triethylaluminium, trisobutylaluminium, tri-n-hexyl-aluminium or tri-n-octyl aluminium. In certain cases, especially with a view to simplifing the process of the invention, the organoaluminium compound may advantageouly be of the same nature as that used as co-catalyst associated with the catalyst in the catalyst system.

Another additional treatment could be a dehydration treatment, which essentially consists in purge operations. If used, said additional dehydration treatment is advantageously performed before the alkane cleaning treatment of the present invention.

According to a preferred embodiment of the present invention, the cleaning treatments (purges, organoaluminum compounds and alkanes) are performed before composing the reacting gas phase. Then, contacting the olefins with the charge powder in the presence of the catalytic system may be performed in a manner in itself known, by means of a polymerisation or copolymerisation reactor with a fluidized bed and/or with mechanical stirring. The reactor is fed with a reaction gas mixture consisting of 1 or more (alpha)-olefins and optionally hydrogen and/or one or more inert gases (including additional optional alkanes), under the conditions of the polymerisation or copolymerisation reaction in the gas phase, that is to say under a pressure generally comprised between 0.1 and 5 MPa, preferably comprised between 0.5 and 4 MPa, and at a temperature generally comprised between 0 DEG and 125 DEG C., preferably comprised between 40 DEG and 120 DEG C. Finally, the catalyst is introduced into the reactor and the reaction starts immediately.

Surprisingly, it has been observed that when one wishes to attain in an advantageous manner, in a relatively short time, a stable production of polyolefin of the desired quality, it is possible thanks to the process of the invention to perform the initial stage of the polymerisation or copolymerisation in the presence of the catalytic system in a relatively large quantities, without forming agglomerates or fine particles.

According to the process of the invention, it is possible to polymerize or copolymerize olefins which may comprise from 2 to 12 carbon atoms, in a fluidized bed and/or with mechanical stirring under very advantageous and very simple conditions, making it possible in particular as soon as the polymerisation or copolymerisation commences, to obtain polymers or copolymers of the desired quality under excellent conditions of yield and productivity of the industrial plant.

For example, using the process of the invention it is possible to produce easily high density polyethylene (density above 0.940), which include homopolymers of ethylene and copolymers of ethylene and alpha-olefins comprising from 3 to 12 carbon atoms, linear low density polyethylene (density less than 0.940), consisting of a copolymer of ethylene and 1 or more alpha-olefins comprising from 3 to 12 carbon atoms, with a content by weight of units derived from ethylene of over 80%, elastomeric terpolymers of ethylene, propylene and dienes, elastomeric copolymers of ethylene and propylene, having a content by weight of units derived from ethylene comprised between about 30 and 70%, isotactic polypropylene and copolymers of propylene and ethylene or other alpha-olefins, having a content by weight of units derived from propylene of over 90%, copolymers of propylene, 1-butene and optionally ethylene having a content by weight of units derived from 1-butene and optionally ethylene comprised between 10 and 40%.

### Example

The gas phase fluidised bed reactor equipment used corresponds to the one disclosed in figure 3 of W09428032. It has an internal diameter of the cylinder of 0.75 m and a height of the cylinder of 6 m.

The reactor is purged with nitrogen at 90°C by proceeding with three consecutive pressurizing (16 bars) - depressurizing (1 bar) steps in order to end with a water content of less than 5 ppm, and preferably less than 2 ppm in nitrogen in the reactor.

The start-up powder (an HDPE or LLDPE polymer) is introduced into the reactor and fluidized with nitrogen. If the measured water content in nitrogen is less than 2 ppm, which is synonymous of an unpolluted bed - no additional water purge is thus necessary (optional step). If the water content is above 2 ppm, it is better to swing pressure until the 2 ppm level is reached.

Pentane is then introduced into the reactor so that its partial pressure in the reactor is 2.5 bars. Fluidisation is continued for half an hour under conditions of 15 bars of total pressure and 88°C.

The reactor is then purged with nitrogen at 88°C by proceeding with five consecutive pressurizing (16 bars) - depressurizing (1 bar) steps.

The reaction gas mixture is then composed and the catalyst introduced into the reactor.

The polymerization reaction starts immediately / no agglomerates or fine particles are formed / and the polyolefins produced during this period of start up have constant properties and the desired quality.

## Claims

1. Process for the polymerisation or copolymerisation in the gas phase of olefin(s) by bringing the said olefin(s) into contact, under polymerization or copolymerisation conditions in a reactor in which the polymer or the copolymer is maintained in a fluidized bed and/or agitated with mechanical stirring, with a catalyst system, which process comprises a pre start-up operation **characterized in that**, prior to the introduction of the catalytic system in the reactor, the reactor is subjected to a cleaning treatment comprising the steps of introducing into the reactor an alkane having from 4 to 8 carbon of at least five minutes atoms, circulating said alkane across the reactor under a pressure above atmospheric pressure and at a temperature of at least 40°C, depressurizing and purging the reactor.

2. Process according to claim 1 wherein the reactor contains a charge powder and wherein said cleaning treatment is performed before, after or during the introduction of the charge powder into the reactor.

3. Process according to claim 2 wherein said cleaning treatment is performed before introduction of the charge powder into the reactor.

4. Process according to any of the preceding claims wherein the introduction of the alkane is performed in the presence of an inert gas, e.g. nitrogen.

5. Process according to any of the preceding claims wherein the cleaning treatment is performed under airtight conditions, in the absence of reacting gas like the olefins.

6. Process according to any of the preceding claims wherein the cleaning treatment comprises circulating the alkane across the reactor under a pressure above the atmospheric pressure, preferably comprised between 5 and 30 bars.

7. Process according to any of the preceding claims wherein the cleaning treatment comprises circulating the alkane across the reactor at a temperature comprised between 50 and 120°C.

8. Process according to any of the preceding claims wherein the alkane is chosen amongst one or more of butane, pentane, hexane, heptane or octane.

9. Process according to claim 8 wherein pentane is used as the alkane.

10. Process according to any of the preceding claims wherein the quantity of alkane used for the treatment is such that the alkane partial pressure is comprised between 25 and 95% of the saturated vapor pressure of the said alkane under the temperature and pressure treatment conditions.

11. Process according to claim 10 wherein the quantity of alkane used for the treatment is such that the alkane partial pressure is comprised between 45 and 75% of the saturated vapor pressure of the said alkane under the treatment conditions.

12. Process according to any of the preceding claims wherein the treatment last at least over 15 minutes.

## Patentansprüche

1. Verfahren für die Polymerisation oder Copolymerisation von Olefin(en) in der Gasphase durch Inkontaktbringen des Olefins/der Olefine unter Polymerisations- oder Copolymerisationsbedingungen in einem Reaktor, in dem das Polymer oder das Copolymer in einem Fließbett gehalten und/oder durch mechanisches Rühren bewegt wird, mit einem Katalysatorsystem, wobei das Verfahren einen Arbeitsgang vor der Inbetriebnahme umfasst, **dadurch gekennzeichnet, dass** vor dem Einführen des katalytischen Systems in den Reaktor der Reaktor einer Reinigungsbehandlung von mindestens 5 Minuten unterzogen wird, umfassend die Schritte des Einführens eines Alkans mit 4 bis 8 Kohlenstoffatomen in den Reaktor, des Zirkulierenlassens des Alkans durch den Reaktor unter einem Druck über Atmosphärendruck und bei einer Temperatur über mindestens 40 °C, des Dekomprimierens und Spülens des Reaktors.

2. Verfahren nach Anspruch 1, wobei der Reaktor ein Ladungspulver enthält und wobei die Reinigungsbehandlung vor, nach oder während der Einführung des Ladungspulvers in den Reaktor durchgeführt wird.

3. Verfahren nach Anspruch 2, wobei die Reinigungsbehandlung vor der Einführung des Ladungspulvers in den Reaktor durchgeführt wird.

4. Verfahren nach einem der vorhergehenden Ansprüche, wobei die Einführung des Alkans in Gegenwart eines Inertgases, z. B. Stickstoff, durchgeführt wird.

5. Verfahren nach einem der vorhergehenden Ansprüche, wobei die Reinigungsbehandlung unter luftdichten Zuständen ohne die Gegenwart von Reaktionsgas, wie der Olefine, durchgeführt wird.

6. Verfahren nach einem der vorhergehenden Ansprüche, wobei die Reinigungsbehandlung das Zirkulierenlassen des Alkans durch den Reaktor unter einem Druck über Atmosphärendruck, vorzugsweise zwischen einschließlich 5 und 30 bar, umfasst.

7. Verfahren nach einem der vorhergehenden Ansprüche, wobei die Reinigungsbehandlung das Zirkulierenlassen des Alkans durch den Reaktor bei einer Temperatur zwischen einschließlich 50 und 120 °C umfasst.

8. Verfahren nach einem der vorhergehenden Ansprüche, wobei das Alkan unter einem oder mehreren von Butan, Pentan, Hexan, Heptan oder Octan ausgewählt wird.

9. Verfahren nach Anspruch 8, wobei Pentan als das Alkan verwendet wird.

10. Verfahren nach einem der vorhergehenden Ansprüche, wobei die Menge an Alkan, die für die Behandlung verwendet wird, eine solche ist, dass der Alkan-Parüaldruck zwischen einschließlich 25 und 95 % des Sättigungsdampfdrucks des Alkans unter den Temperatur- und Druck-Behandlungsbedingungen liegt.

11. Verfahren nach Anspruch 10, wobei die Menge an Alkan, die für die Behandlung verwendet wird, eine solche ist, dass der Alkan-Partialdruck zwischen einschließlich 45 und 75 % des Sättigungsdampfdrucks des Alkans unter den Behandlungsbedingungen liegt.

12. Verfahren nach einem der vorhergehenden Ansprüche, wobei die Behandlung mindestens 15 Minuten dauert.

## Revendications

1. Procédé de polymérisation ou de copolymérisation en phase gazeuse d'oléfine(s) par mise en contact de ladite ou desdites oléfines, dans des conditions de polymérisation ou de copolymérisation dans un réacteur dans lequel le polymère ou le copolymère est maintenu en lit fluidisé et/ou agité par agitation mécanique, avec un système catalytique, procédé qui comprend une opération de pré-démarrage **caractérisé en ce que**, avant introduction du système catalytique dans le réacteur, le réacteur est soumis à un traitement de nettoyage d'au moins cinq minutes comprenant les étapes consistant à introduire dans le réacteur un alcane ayant de 4 à 8 atomes de carbone, à faire circuler l'alcane dans le réacteur sous une pression supérieure à la pression atmosphérique et à une température d'au moins 40°C, à dépressuriser et à purger le réacteur.

2. Procédé selon la revendication 1, dans lequel le réacteur contient une poudre de charge et dans lequel ledit traitement de nettoyage est effectué avant, après ou pendant l'introduction de la poudre de charge dans le réacteur.

3. Procédé selon la revendication 2, dans lequel ledit traitement de nettoyage est effectué avant introduction de ladite poudre de charge dans le réacteur.

4. Procédé selon l'une quelconque des revendications précédentes, dans lequel l'introduction de l'alcane est effectuée en présence d'un gaz inerte, par exemple l'azote.

5. Procédé selon l'une quelconque des revendications précédentes, dans lequel le traitement de nettoyage est effectué dans des conditions étanches à l'air, en l'absence de gaz réactif comme les oléfines.

6. Procédé selon l'une quelconque des revendications précédentes, dans lequel le traitement de nettoyage comprend la circulation de l'alcane dans le réacteur sous une pression supérieure à la pression atmosphérique, de préférence comprise entre 5 et 30 bars.

7. Procédé selon l'une quelconque des revendications précédentes, dans lequel le traitement de nettoyage comprend la circulation de l'alcane dans le réacteur à une température comprise entre 50 et 120°C.

8. Procédé selon l'une quelconque des revendications précédentes, dans lequel l'alcane est choisi parmi un ou plusieurs des butane, pentane, hexane, heptane ou octane.

9. Procédé selon la revendication 8, dans lequel le pentane est utilisé en tant qu'alcane.

10. Procédé selon l'une quelconque des revendications précédentes, dans lequel la quantité d'alcane utilisée pour le traitement est telle que la pression partielle de l'alcane est comprise entre 25 et 95 % de la pression de vapeur saturée dudit alcane dans les conditions de température et de pression du traitement.

11. Procédé selon la revendication 10, dans lequel la quantité d'alcane utilisée pour le traitement est telle que la pression partielle de l'alcane est comprise entre 45 et 75 % de la pression de vapeur saturée dudit alcane dans les conditions de traitement.

12. Procédé selon l'une quelconque des revendications précédentes, dans lequel le traitement dure au moins plus de 15 minutes.
